# EUROPEAN PATENT APPLICATION

(11) **EP 3 648 457 A1**
(43) Date of publication of application: **06.05.2020**
(21) Application number: 18823121.1
(22) Date of filing: 19.06.2018
(51) Int. Cl.: H04N 7/18, B60R 1/00

(54) **PROCESSOR, IMAGE PROCESSING DEVICE, MOBILE ENTITY, IMAGE PROCESSING METHOD, AND PROGRAM**

(30) Priority: 28.06.2017 JP 2017126643
(71) Applicant: Kyocera Corporation, Kyoto-shi Kyoto 612-8501 (JP)
(72) Inventor: HIRANO, Yasuaki, Kyoto-shi Kyoto 612-8501 (JP)
(74) Representative: Viering, Jentschura & Partner mbB Patent- und Rechtsanwälte
(86) International application number: PCT/JP2018/023213
(87) International publication number: WO 2019/003996

(57) **Abstract**

A processor includes an acquisition unit configured to acquire a captured image from a camera and an image processing unit configured to recognize an object from a recognition image that is based on the captured image. The image processing unit determines a resolution level corresponding to a resolution for the recognition image based on a characteristic of the object.

## Description

### CROSS REFERENCE TO RELATED APPLICATION

This application claims priority to and the benefit of Japanese Patent Application No. 2017-126643 (filed on June 28, 2017), the entire contents of which are incorporated herein by reference.

### TECHNICAL FIELD

The present disclosure relates to a processor, an image processing apparatus, a mobile body, an image processing method, and a program.

### BACKGROUND

For object detection by image recognition, configurations which reduce the processing load for image recognition by extending an imaging cycle in accordance with the result of the image recognition are known (e.g., see PTL 1 below).

### CITATION LIST

### Patent Literature

PTL 1: JP-A-2007-172035

### SUMMARY

A processor according to an embodiment of the present disclosure includes an acquisition unit configured to acquire a captured image from a camera and an image processing unit configured to recognize an object from a recognition image that is based on the captured image. The image processing unit determines a resolution level corresponding to a resolution for the recognition image based on a characteristic of the object.

An image processing apparatus according to an embodiment of the present disclosure includes a processor that includes a camera, an acquisition unit configured to acquire a captured image from the camera, and an image processing unit configured to recognize an object from a recognition image that is based on the captured image. The image processing unit determines a resolution level corresponding to a resolution for the captured image based on a characteristic of the object.

A mobile body according to an embodiment of the present disclosure comprises an image processing apparatus mounted to the mobile body. The image processing apparatus includes a processor that includes a camera, an acquisition unit configured to acquire a captured image from the camera, and an image processing unit configured to recognize an object from a recognition image that is based on the captured image. The image processing unit determines a resolution level corresponding to a resolution for the captured image based on a characteristic of the object.

An image processing method according to an embodiment of the present disclosure includes a step of acquiring a captured image from a camera. The image processing method includes a step of recognizing an object from a recognition image that is based on the captured image. The image processing method includes a step of determining a resolution level corresponding to a resolution for the recognition image based on a characteristic of the object.

A program according to an embodiment of the present disclosure causes a processor to perform a step of acquiring a captured image from a camera. The program causes the processor to perform a step of recognizing an object from a recognition image that is based on the captured image. The program causes the processor to perform a step of determining a resolution level corresponding to a resolution for the recognition image based on a characteristic of the object.

### BRIEF DESCRIPTION OF THE DRAWINGS

In the accompanying drawings:
FIG. 1 is a block diagram illustrating an example configuration of an imaging apparatus and a processor according to an embodiment;
FIG. 2 is a block diagram illustrating an example configuration of a camera;
FIG. 3 is a block diagram illustrating an example configuration of a processor;
FIG. 4 is a diagram illustrating an example configuration in which the imaging apparatus is mounted to a mobile body;
FIG. 5 is a diagram illustrating an example table in which characteristics of an object and behaviors of the mobile body are associated with resolution levels; and
FIG. 6 is a flowchart illustrating example procedure of an image processing method according to the embodiment.

### DETAILED DESCRIPTION

For object detection by image recognition, when an imaging cycle is long, the timing to capture sudden movements or changes of an imaging subject may be delayed. Thus, it is desirable to reduce the processing load for image recognition without depending on changes in the imaging cycle.

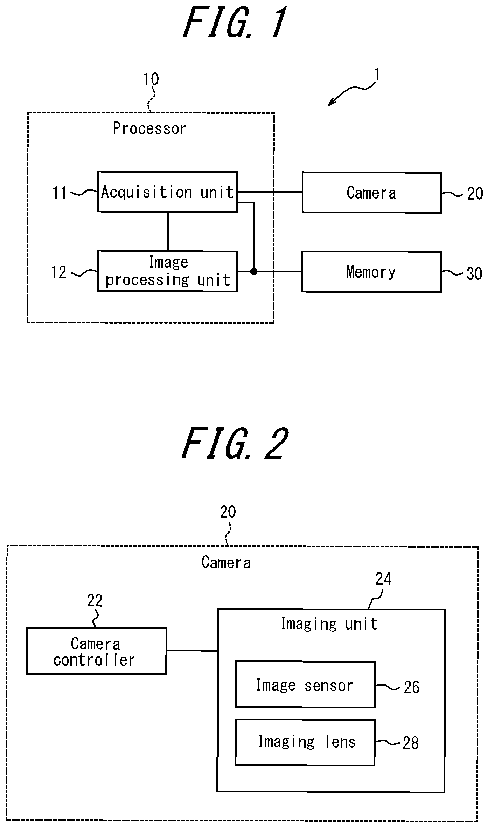

An image processing apparatus 1 according to an embodiment includes a processor 10, a camera 20, and a memory 30, as illustrated in FIG. 1.

The processor 10 includes an acquisition unit 11 and an image processing unit 12. The acquisition unit 11 acquires an image captured by the camera 20 from the camera 20. An image captured by the camera 20 and output to the processor 10 will also be referred to as a captured image. The image processing unit 12 recognizes an object from a recognized object image. The recognized object image will also be referred to as a recognition image. The recognition image is an image that is based on the captured image acquired from the camera 20. The recognition image may be an image obtained by processing the captured image. The recognition image may be an image obtained by, for example, changing a resolution of the captured image to a different resolution. When the recognition image is obtained by reducing the resolution of the captured image, the data volume of the recognition image may be smaller than the data volume of the captured image.

The processor 10 may be configured to perform general-purpose processing in accordance with a program or perform specific processing. The processor 10 may include an application-specific IC (Integrated Circuit). The application-specific IC is also referred to as an ASIC (Application Specific Integrated Circuit). The processor 10 may include a programmable logic device. The programmable logic device is also referred to as a PLD (Programmable Logic Device). The PLD may include a FPGA (Field-Programmable Gate Array). The processor 10 may be configured as a SoC (System-on-a-Chip) or a SiP (System In a Package) in which one or more processors cooperate.

The camera 20 includes a camera controller 22 and an imaging unit 24, as illustrated in FIG. 2. The imaging unit 24 includes an image sensor 26 and an imaging lens 28. The imaging unit 24 captures an image of an object formed by the imaging lens 28 using the image sensor 26. The image captured by the imaging unit 24 may also be referred to as a captured image. The camera controller 22 outputs an imaging control instruction to the imaging unit 24 and acquires the captured image from the imaging unit 24. The image sensor 26 may be configured as, for example, a CMOS (Complementary Metal Oxide Semiconductor) image sensor or a CCD (Charge Coupled Device).

The memory 30 stores various information or parameters associated with operations of the image processing apparatus 1. The memory 30 may be configured as, for example, a semiconductor memory or the like. The memory 30 may function as a working memory of the processor 10. The memory 30 may store a captured image. The memory 30 may be included in the processor 10.

The image processing unit 12 determines a resolution for the recognition image based on a characteristic of a recognized object. The image processing unit 12 may express the resolution of the recognition image using a corresponding resolution level. In other words, the resolution level may correspond to the resolution for the recognition image. In the present embodiment, the resolution level is represented by three levels: A, B, and C. The resolution level is assumed to be higher in descending order of A, B, and C. For example, the resolution of the resolution level A is assumed to be the maximum resolution that can be captured by the image sensor 26. For example, the resolution of the resolution level C is assumed to be a minimum resolution necessary for the image processing unit 12 to recognize an object. The number of resolution levels is not limited to three and may be two or more than three. Representation of the resolution level is not limited letters such as A, B, and C. The resolution level may be expressed as a numerical value.

The image processing unit 12 may output the resolution level to the acquisition unit 11. The acquisition unit 11 may convert the captured image acquired from the camera 20 into an image in a resolution corresponding to the resolution level and output the converted image as a recognition image to the image processing unit 12. The acquisition unit 11 may convert the captured image into an image in a different resolution by thinning out the pixels or by employing various other methods.

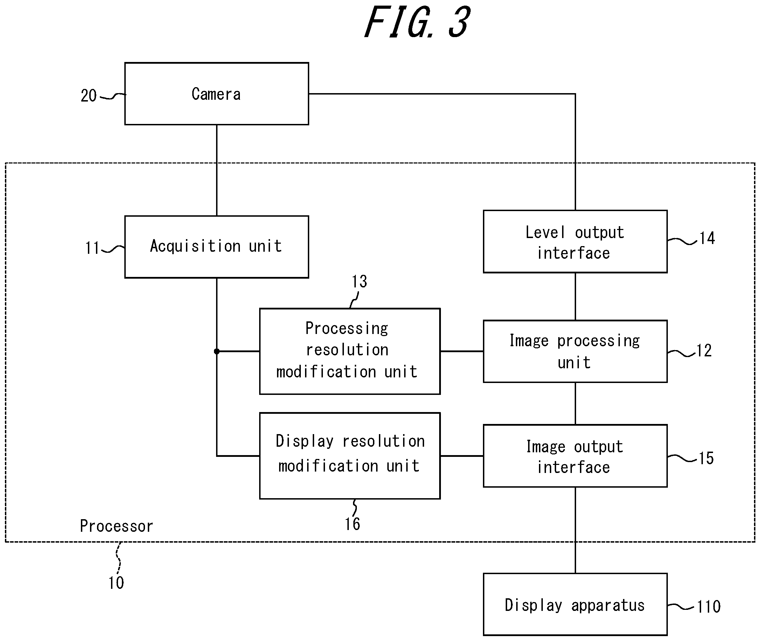

The processor 10 may further include a processing resolution modification unit 13, as illustrated in FIG. 3. The processing resolution modification unit 13 may convert a captured image acquired by the acquisition unit 11 into an image in a resolution corresponding to a resolution level based on a resolution level acquired from the image processing unit 12, and output the converted image as a recognition image to the image processing unit 12. The processing resolution modification unit 13 may change the resolution of the image to be output to the image processing unit 12 by thinning out the pixels of the captured image or by employing various other methods.

Because the acquisition unit 11 or the processing resolution modification unit 13 outputs an image obtained by reducing the resolution of the captured image, the data volume of the image acquired by the image processing unit 12 can be reduced. This can reduce operations necessary for the image processing unit 12 to recognize the object. As a result, the power consumption and the heat generation of the processor 10 can be reduced.

The processor 10 may further include a level output interface 14, as illustrated in FIG. 3. The image processing unit 12 may output the resolution level to the camera 20 via the level output interface 14. The camera 20 may change the resolution of the captured image to be output from the resolution of the image captured by the image sensor 26 to a resolution corresponding to the resolution level. The camera 20 may change the resolution of the captured image by changing the number of lines of the image sensor 26 to be read when capturing an object. When the number of lines of the image sensor 26 to be read is reduced, the frame rate of the captured images can be increased. The camera 20 may output an image obtained by changing the resolution of the image output by the image sensor 26 using the camera controller 22 as the captured image. The camera 20 may change the resolution of the captured image by employing various other methods.

When the resolution of the captured image output by the camera 20 is reduced, the data volume of the image acquired by the processor 10 can be reduced. In this way, the data volume handled by the processor 10 can be reduced. As a result, the power consumption and the heat generated by the processor 10 can be reduced.

The processor 10 may further include an image output interface 15, as illustrated in FIG. 3. The processor 10 may output an image to a display apparatus 110 via the image output interface 15 and cause the display apparatus 110 to display the image. The display apparatus 110 may be configured as a display device such as, for example, a liquid crystal display device, an organic EL (Electroluminescence) display device, an inorganic EL display device, or an LED (Light Emission Diode) display device.

The image output interface 15 may cause the display apparatus 110 to display the captured image acquired by the acquisition unit 11 without modification. The image output interface 15 may cause the display apparatus 110 to display an image in which information regarding a recognition result of the object is superimposed on the captured image. This enables the user to easily see the recognition result of the object.

The information regarding the recognition result of the object may be information corresponding to an indication which highlights the recognized object. The indication which highlights the object may include, for example, a circle, an ellipse, or a polygon that surrounds the object, or an arrow pointing at the object. The information regarding the recognition result of the object may be an arrow or the like representing movement of the object. The information regarding the recognition result of the object may be data such as text describing the recognized object.

The processor 10 may further include a display resolution modification unit 16, as illustrated in FIG. 3. The display resolution modification unit 16 may modify the resolution of the captured image acquired by the acquisition unit 11 and output the image in the modified resolution as a display image to the image output interface 15. The display resolution modification unit 16 may convert the captured image into an image in a resolution that can be displayed on the display apparatus 110. The display resolution modification unit 16 may convert the captured image into an image in a resolution corresponding to a resolution level. The image output interface 15 may cause the display apparatus 110 to display the display image acquired from the display resolution modification unit 16. The image output interface 15 may cause the display apparatus 110 to display an image having the information regarding the recognition result of the object superimposed thereon. Because the display resolution modification unit 16 and the processing resolution modification unit 13 are provided separately from each other, the resolution for the recognition image and the resolution for the display image can be determined separately.

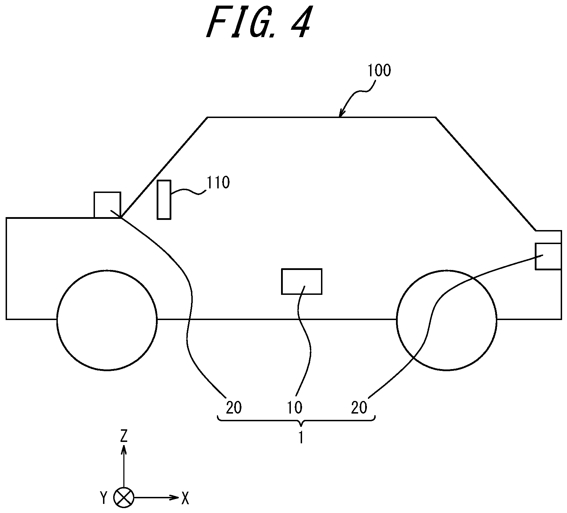

The image processing apparatus 1 may be mounted to a mobile body 100, as illustrated in FIG. 4. The mobile body 100 having the image processing apparatus 1 mounted thereto will also be referred to as a respective vehicle. A forward direction and a rearward direction of the mobile body 100 correspond to a negative X-axis direction and a positive X-axis direction, respectively. The camera 20 captures an image surrounding the mobile body 100 on the front side or the rear side of the mobile body 100. The mounting position of the camera 20 is not limited to the front side and the rear side of the mobile body 100 and may be various portions of the mobile body 100 where the camera can capture images around the mobile body 100 in various directions, including a lateral direction or an upward direction.

The processor 10, the camera 20, and the display apparatus 110 may be provided with a communication device enable communication with one another. The communication device may be a communication interface such as, for example, a LAN (Local Area Network) interface or a CAN (Control Area Network) interface. The communication device may perform wired or wireless communication. The processor 10 may be included in an external server apparatus or the like that is capable of communicating with the camera 20. In this case, the processor 10 does not need to be mounted to the mobile body 100.

The image processing unit 12 may recognize an object from the recognition image. The recognition image may be a captured image capturing the surroundings of the respective vehicle or an image obtained by converting the captured image into an image in a resolution corresponding to a resolution level.

The image processing unit 12 may recognize a mobile body other than the respective vehicle such as an automobile, a motorcycle, and a bicycle, a pedestrian, an animal, and the like, as an object. The image processing unit 12 may recognize a traveling path defined by a guardrail, white line, or the like. The image processing unit 12 may recognize a traffic signal, a road sign, and the like. The image processing unit 12 may recognize a building or a structure such as a tree. The image processing unit 12 may recognize various objects other than the aforementioned objects. The image processing unit 12 may detect a type of object in the above-described classification as a characteristic of the recognized object.

The image processing unit 12 may detect a distance to an object or a size of an image of the object as the characteristic of the recognized object. The size of the image of the object will also be referred to as a size of the object in the image. The image processing unit 12 may detect whether the object is stationary or moving, as the characteristic of the recognized object. When the recognized object is moving, the image processing unit 12 may detect the velocity of the object. The velocity of the object includes the speed and the moving direction. The image processing unit 12 may detect a distance between the respective vehicle and the recognized object by, for example, detecting a characteristic point indicative of the distance from the respective vehicle in the recognition image. The image processing unit 12 may detect the velocity of the recognized object based on a frame rate of the recognition image and the movement of the object in each frame.

For example, when the recognition image is located at a position closer than a predetermined distance, or when the size of the image of the object is equal to or larger than a predetermined size, the image processing unit 12 can recognize the image in a relatively low resolution. In this case, the resolution level may be set to C. For example, when the recognition image is located at a position further than the predetermined distance, or when the size of the image of the object is smaller than the predetermined size, the image processing unit 12 needs a relatively high resolution to recognize the object. In this case, the resolution level may be set to A.

The processor 10 may acquire information regarding the behavior of the mobile body 100. The information regarding the behavior of the mobile body 100 may include information indicating whether the vehicle is moving or stopped. When the respective vehicle is moving, the information regarding the behavior of the mobile body 100 may include information indicating a speed and a moving direction of the respective vehicle. The information regarding the behavior of the mobile body 100 is not limited thereto and may include various other information. The information regarding the behavior of the mobile body 100 may include at least one of the above information.

The processor 10 may directly or indirectly acquire the information regarding the behavior of the mobile body 100 from the mobile body 100. The processor 10 may calculate the information regarding the behavior of the mobile body 100 based on a recognition result of an object surrounding the mobile body 100 acquired by the image processing unit 12.

The image processing unit 12 may determine the resolution level based on the information regarding the behavior of the mobile body 100. For example, when the mobile body 100 is stopped, the image processing unit 12 can recognize an object surrounding the mobile body 100 in a relatively low resolution. In this case, the resolution level may be determined to be C. When the mobile body 100 is moving at a predetermined speed or faster, the image processing unit 12 may set the resolution level to A such that an object surrounding the mobile body 100 can be easily recognized.

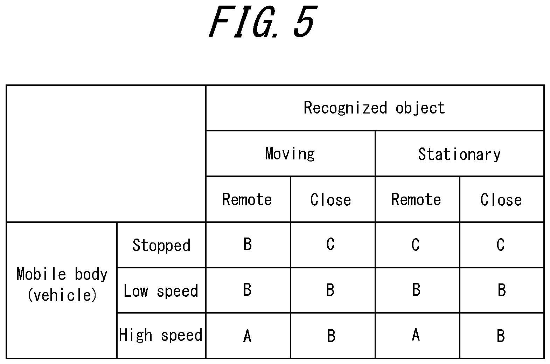

The image processing unit 12 may determine the resolution level based on the characteristic of the recognized object and the information regarding the behavior of the mobile body 100. The image processing unit 12 may determine the resolution level based on the table illustrated in FIG. 5 by way of example in which the characteristics of the recognized object and the behaviors of the mobile body 100 are associated with the resolution levels. The terms "fast" and "slow" mean that the respective vehicle is moving at a predetermined speed or faster and that the respective vehicle is moving slower than the predetermined speed, respectively. The terms "remote" and "close" mean that the recognized object is located at a predetermined distance or further from the respective vehicle and that the recognized object is located at a location closer than the predetermined distance, respectively. For example, in a case in which the respective vehicle is stopped and the recognized object is stationary, the resolution level may be set to C, regardless of the distance between the respective vehicle and the object. For example, in a case in which the vehicle is moving at a high speed, the resolution level is set to A when the distance between the respective vehicle and the object is long, and the resolution level is set to B when the distance between the respective vehicle and the object is short.

The information associated with the resolution levels in the table is not limited to the speed of the respective vehicle, movement of the recognized object, and the distance to the object. For example, a type of the recognized object or a size of an image of the object may be associated with the resolution level. For example, a pedestrian as a recognized object may be associated with a relatively high resolution.

The image processing unit 12 may determine the resolution level based on a score calculated using the characteristic of the recognized object and the information regarding the behavior of the mobile body 100. When the resolution level is determined to be higher as the score is higher, the image processing unit 12 may calculate, for example, a higher score as the mobile body 100 is moving faster, or a higher score as the distance to the recognized object is longer.

The speed of the object detected from the recognition result of the object by the image processing unit 12 is a relative speed between the respective vehicle and the object. The image processing unit 12 may convert the relative speed of the object detected from the recognition result of the object into an absolute speed based on information regarding the speed of the respective vehicle.

The image processing unit 12 may change from a high resolution level to a low resolution level in the following cases, by way of example. The image processing unit 12 may lower the resolution level when the respective vehicle is stopped, or when the speed of the respective vehicle becomes slower than the predetermined speed. The image processing unit 12 may lower the resolution level when the recognized object is located at a position shorter than the predetermined distance from the respective vehicle, or when the size of the image of the recognized object is larger than the predetermined size. The image processing unit 12 may lower the resolution level based on various conditions other than the above examples.

The image processing unit 12 may increase the resolution level from a lower level to a higher level in the following cases, by way of example. When the image processing unit 12 determines that the relative speed between the object and the respective vehicle is higher than the predetermined speed, the image processing unit 12 may increase the resolution level to facilitate continuous recognition of the object. When objects considered as an identical object are intermittently recognized rather than continuously, the image processing unit 12 may increase the resolution level such that the object is reliably recognized. When a value indicating the reliability of the recognition result of the object is lower than a predetermined value, the image processing unit 12 may increase the resolution level to improve the reliability of the recognition result of the object. The reliability of the recognition result of the object may be, for example, a pattern matching degree of coincidence. The image processing unit 12 may increase the resolution level based on a change in a state of the respective vehicle. For example, the image processing unit 12 may increase the resolution level when the speed of the respective vehicle is higher than the predetermined speed, when the respective vehicle enters a highway, or when the respective vehicle enters a school zone. When an object located at a position closer than the predetermined distance from the respective vehicle has passed or disappeared, the image processing unit 12 may assume that the primary factor for reducing the resolution level no longer exists and increase the resolution level. The image processing unit 12 may increase the resolution level based on various conditions other than the above examples.

The image processing unit 12 may operate in such a manner as to normally increase the resolution level as high as possible and reduce the resolution level when a condition is satisfied. In this way, an object can be continuously recognized from a recognition image, and the data volume of the recognition images can be reduced overall. As a result, the object can be recognized while power consumption and the heat generated by the processor 10 can be reduced.

The image processing unit 12 may operate in such a manner as to normally reduce the resolution level as low as possible and increase the resolution level when a condition is satisfied. In this way, the data volume of the recognition image can be normally reduced while the images can be continuously recognized from the recognition image. As a result, the power consumption and the heat generated by the processor 10 can be reduced while the object can be recognized.

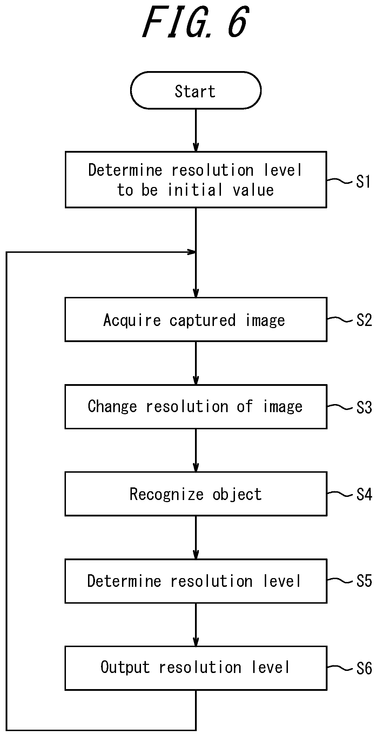

The processor 10 may perform an image processing method in line with the procedure of the flowchart illustrated in FIG. 6.

The processor 10 determines the resolution level to be an initial value using the image processing unit 12 (step S1). The initial value of the resolution level may be any one of A, B, and C. The initial value of the resolution level may be another level based on another expression of the resolution level. The processor 10 may output the initial value of the resolution level to the camera 20 using the level output interface 14. In this case, the camera 20 may output the captured image in the resolution corresponding to the initial value of the resolution level. The camera 20 may be configured to output the captured image in the resolution corresponding to the initial value of the resolution level in an initial state of the image processing apparatus 1.

The processor 10 acquires the captured image from the camera 20 using the acquisition unit 11 (step S2).

The processor 10 changes the resolution of the captured image (step S3). The processor 10 may convert the captured image into an image in a resolution corresponding to the resolution level using the acquisition unit 11 or the processing resolution modification unit 13 and output the converted image as the recognition image to the image processing unit 12. When the camera 20 outputs a captured image in the resolution corresponding to the resolution level, the processor 10 does not need to change the resolution of the captured image.

The processor 10 acquires the recognition image from the acquisition unit 11 or the processing resolution modification unit 13 using the image processing unit 12. The image processing unit 12 recognizes the object from the recognition image (step S4). The image processing unit 12 may detect a type of the object as the characteristic of the recognized object. The image processing unit 12 may detect the distance to the object or the velocity of the object as the characteristic of the recognized object. The image processing unit 12 may detect various information regarding the object as the characteristic of the recognized object.

The processor 10 determines the resolution level using the image processing unit 12 based on the characteristic of the recognized object (step S5). The image processing unit 12 may acquire the information regarding the behavior of the mobile body 100 from the mobile body 100. The image processing unit 12 may calculate the information regarding the behavior of the mobile body 100 from the recognition image. The image processing unit 12 may determine the resolution level further based on the information regarding the behavior of the mobile body 100. The image processing unit 12 may determine the resolution level based on the table illustrated in FIG. 5 by way of example, or based on another method.

The processor 10 outputs the resolution level determined by the image processing unit 12 (step S6). The image processing unit 12 may output the resolution level to the acquisition unit 11, the processing resolution modification unit 13, or the display resolution modification unit 16. The image processing unit 12 may output the resolution level to the camera 20 via the level output interface 14. After step S6, the processor 10 returns to step S2.

According to the image processing apparatus 1 and the processor 10 of the present embodiment, by determining the resolution level, the data volume of the recognition images processed by the image processing unit 12 is reduced. As a result, the power consumption and the heat generated by the processor 10 can be reduced.

The acquisition unit 11, the processing resolution modification unit 13, or the display resolution modification unit 16 may convert the captured image into an image in the resolution corresponding to the resolution level based on the resolution level. The functionality for modifying the resolution may be realized by executing a program corresponding to each resolution level using a general-purpose arithmetic circuit. In other words, the functionality for modifying the resolution may be realized by software. The functionality for modifying the resolution may be realized by specialized arithmetic circuits corresponding to the respective resolution levels. In this case, the processor 10 may include a specialized arithmetic circuit corresponding to each resolution level. That is, the functionality for modifying the resolution may be realized by hardware. By realizing the functionality for modifying the resolution using the specialized arithmetic circuit corresponding to each resolution level, the captured image can be converted into an image in a different resolution in a fast and easy manner.

The mobile body 100 according to the present disclosure may encompass, for example, vehicles, ships, and aircrafts. Vehicles may include automobiles and industrial vehicles. Vehicles are not limited thereto but may include rail vehicles, domestic vehicles, and fixed-wing aircrafts that travel on a runway. Automobiles may include, for example, cars, trucks, buses, motorcycles, and trolley buses. Automobiles are not limited thereto but may include other automobiles that travel on the road. Industrial vehicles may include, for example, agricultural vehicles and construction vehicles. Industrial vehicles may include, for example, forklifts and golf carts. Industrial vehicles for agricultural purpose may include, for example, tractors, tillers, transplanters, binders, combined harvesters, and lawn mowers. Industrial vehicles for construction purposes may include, for example, bulldozers, scrapers, excavators, crane trucks, dump trucks, and load rollers. The vehicles may include human-powered vehicles traveling on human power. Classification of the vehicles is not limited to the above. For example, vehicles may include industrial vehicles authorized to travel on the road, and a plurality of categories may include the same type of vehicle. Vessels may include, for example, watercrafts, boats, and tankers. Aircraft may include, for example, fixed wing aircraft and rotorcraft.

The image processing apparatus 1 according to the present disclosure may be mounted to a mobile terminal, a portable terminal, or the like. The image processing apparatus 1 according to the present disclosure may be mounted to a stationary device. The image processing apparatus 1 according to the present disclosure may be independently used as a stationary apparatus or a mobile apparatus. A terminal or the apparatus having the image processing apparatus 1 mounted thereto is also referred to as a respective device. When the image processing apparatus 1 is mounted to a terminal or an apparatus, the information regarding the behavior of the mobile body 100 may be replaced with information regarding the behavior of the respective device.

Although the disclosure has been described based on the figures and the embodiment, it is to be understood that various changes and modifications may be implemented based on the present disclosure by those who are ordinarily skilled in the art. Accordingly, such changes and modifications are included in the scope of the disclosure herein. For example, functions and the like included in each unit, each means, each step and the like may be rearranged without logical inconsistency, so as to combine a plurality of units or steps together or to divide them. Although the apparatus has been mainly explained in the embodiment of the present disclosure, the embodiment of the present disclosure can be realized by a method that includes steps performed by a constituent element of the apparatus. The embodiment of the present disclosure may be realized by a method performed by a processor of an apparatus, a program, or a storage medium storing the program. It should be understood that they are included within the scope of the present disclosure.

### REFERENCE SIGNS LIST

- 1: image processing apparatus
- 10: processor
- 11: acquisition unit
- 12: image processing unit
- 13: processing resolution modification unit
- 14: level output interface
- 15: image output interface
- 16: display resolution modification unit
- 20: camera
- 22: camera controller
- 24: imaging unit
- 26: image sensor
- 28: imaging lens
- 30: memory
- 100: mobile body
- 110: display apparatus

## Claims

1. A processor comprising:
an acquisition unit configured to acquire a captured image from a camera; and
an image processing unit configured to recognize an object from a recognition image that is based on the captured image, and
determine a resolution level corresponding to a resolution for the recognition image based on a characteristic of the object.

2. The processor according to claim 1, further comprising a level output interface configured to output the resolution level to the camera.

3. The processor according to claim 1 or 2, further comprising a processing resolution modification unit configured to convert the captured image into the recognition image in the resolution corresponding to the resolution level, and output the recognition image to the image processing unit.

4. The processor according to any one of claims 1 to 3,
wherein the camera is mounted to a mobile body, and
the image processing unit determines the resolution level further based on information regarding a behavior of the mobile body.

5. The processor according to claim 4,
wherein the information regarding the behavior of the mobile body includes at least one of whether the mobile body is stopped, a speed of the mobile body, and a moving direction of the mobile body.

6. The processor according to any one of claims 1 to 5,
wherein the characteristic of the object includes at least one of whether the object is stationary, a speed of the object, and a moving direction of the object.

7. The processor according to any one of claims 1 to 6, further comprising an image output interface configured to output a display image based on the captured image to a display apparatus,
wherein the image processing unit outputs an indication based on a recognition result of the object from the captured image to the image output interface, and
the image output interface outputs an image in which the indication is superimposed on the display image to the display apparatus.

8. The processor according to claim 7, further comprising a display resolution modification unit configured to convert the captured image into an image in a resolution different from a resolution of the captured image, and output the image as the display image to the image output interface.

9. An image processing apparatus comprising:
a camera; and
a processor including an acquisition unit configured to acquire a captured image from the camera and an image processing unit configured to recognize an object from a recognition image that is based on the captured image,
wherein the image processing unit determines a resolution level corresponding to a resolution for the captured image based on a characteristic of the object.

10. A mobile body comprising an image processing apparatus mounted to the mobile body, the image processing apparatus comprising:
a camera; and
a processor including an acquisition unit configured to acquire a captured image from the camera and an image processing unit configured to recognize an object from a recognition image that is based on the captured image,
wherein the image processing unit determines a resolution level corresponding to a resolution for the captured image based on a characteristic of the object.

11. An image processing method comprising:
a step of acquiring a captured image from a camera;
a step of recognizing an object from a recognition image that is based on the captured image; and
a step of determining a resolution level corresponding to a resolution for the recognition image based on a characteristic of the object.

12. A program for causing a processor to perform:
a step of acquiring a captured image from a camera;
a step of recognizing an object from a recognition image that is based on the captured image; and
a step of determining a resolution level corresponding to a resolution for the recognition image based on a characteristic of the object.
